# EUROPÄISCHE PATENTSCHRIFT

(11) **EP 1 048 101 B1**
(45) Veröffentlichungstag und Bekanntmachung des Hinweises auf die Patenterteilung: **24.07.2002**
(21) Anmeldenummer: 99929039.8
(22) Anmeldetag: 28.04.1999
(51) Int. Cl.: H02G 15/013, H02G 15/076

(54) **KABELMUFFE AUS EINEM UMHÜLLUNGSKÖRPER UND MINDESTENS EINEM STIRNSEITIGEN DICHTUNGSKÖRPER**
CABLE SLEEVE CONSISTING OF A COVERING BODY AND AT LEAST ONE FRONT-FACE SEALING BODY
MANCHON DE CABLE CONSTITUE D'UN CORPS ENVELOPPANT ET D'AU MOINS D'UN CORPS D'ETANCHEITE FACIAL

(30) Priorität: 18.11.1998 DE 19853203
(43) Veröffentlichungstag der Anmeldung: 02.11.2000
(73) Patentinhaber: CCS Technology, Inc., Wilmington, DE 19803 (US)
(72) Erfinder: LAPP, Oliver, D-42287 Wuppertal (DE); ZIMMER, Rainer, D-58579 Schalksmühle (DE)
(74) Vertreter: Sturm, Christoph, Dipl.-Ing.
(86) Internationale Anmeldenummer: DE9901251
(87) Internationale Veröffentlichungsnummer: WO0030231

(56) Entgegenhaltungen:
- EP-A- 0 844 716
- EP-A- 0 844 717
- WO-A-96/32660

## Beschreibung

Die Erfindung betrifft eine Kabelmuffe aus einem Umhüllungskörper und mindestens einem stirnseitigen Dichtungskörper mit umlaufender, U-förmiger Dichtungsnut und einer Ringdichtung, wobei der Umhüllungskörper am stirnseitigen Ende einen umlaufenden, konisch abgeschrägten Flansch aufweist, der zusammen mit der in der Dichtungsnut eingesetzten Ringdichtung von einem Spannring in dessen Ringnut umfaßt ist.

Aus EP 0 844 716 A ist eine Kabelmuffe gemäß dem Oberbegriff des Patentanspruchs 1 bekannt, die aus einem Umhüllungskörper mit einem angesetzten Flansch besteht, an den ein Dichtungssystem aus einer ringförmigen Dichtung mit Hilfe eines Spannringes angepreßt wird.

Aus EP 0 844 717 A ist ein Spannring für Flanschverbindungen bei Kabelgarnituren oder Rohren bekannt. Dieser Spannring besteht aus mehreren Teilsegmenten, wobei diese Teilringsegmente von einem Spannband umfaßt werden. Beim Spannen des Spannbandes werden die Teilringsegmente radial einwärts auf das Dichtungssystem gepreßt.

Aus WO 9632660 A ist außerdem eine Haubenmuffe bekannt, die aus einem Dichtkörper und einem Haubenkörper gebildet ist. In einer im Volumen veränderbaren Dichtungsnut ist ein Dichtring eingelagert, der durch Verformung gegen die Innenwand des Haubenkörpers beim Verschließen gepreßt wird. Diese Verpressung des Dichtringes erfolgt durch Verengung der Dichtungsnut zum Beispiel mit Hilfe eines Exzenters.

Der vorliegenden Erfindung liegt die Aufgabe zugrunde, eine Kabelmuffe zu schaffen, bei der die Dichtungsverhältnisse zwischen dem Dichtungskörper und dem Umhüllungskörper mit Hilfe einer geeigneten Ringdichtung und einem darauf abgestimmten Spannring zu verbessern. Die gestellte Aufgabe wird nun gemäß der Erfindung mit einer Kabelmuffe der eingangs erläuterten Art dadurch gelöst, daß die Ringdichtung als Grundquerschnitt eine L-Form aufweist, daß der erste Schenkel der L-Form im Querschnitt der Dichtungsnut des Dichtungskörpers angepaßt ist, daß der zweite Schenkel der L-Form zum ersten Schenkel hin im Querschnitt beidseitig konisch zulaufend verbreitert ist, wobei der konische Verlauf dieses zweiten Schenkels auf der einen Seite dem Verlauf des abgeschrägten Flansches und auf der anderen Seite dem Verlauf einer konischen Nutwandung der Ringnut im Spannring entspricht und daß der Spannring einen auf den in der Dichtungsnut des Dichtungskörpers positionierten ersten Schenkel der Ringdichtung wirkenden umlaufenden Druckansatz aufweist.

Entscheidender Vorteil an dem Dichtungssystem gemäß der Erfindung gegenüber dem bekannten Stand der Technik ist, daß der den Dichtungsdruck ausübende Spannring nicht nur eine Gesamtverformung der Ringdichtung bewirkt, sondern daß beim Schließvorgang die Abdichtung zum Umhüllungskörper durch die Nutwandung der Ringnut des Spannringes und die Abdichtung zum Dichtungskörper durch die Einwirkung eines umlaufenden Druckansatzes auf die Ringdichtung erfolgt. Aus diesem Grunde ist die Ringdichtung in der Grundform L-förmig ausgebildet, wobei der erste, im allgemeinen kürzere Schenkel der Nutform des Dichtungskörpers angepaßt ist. Der zweite Schenkel der L-förmigen Ringdichtung dient zur Abdichtung gegen einen umlaufenden Flansch des Umhüllungskörpers, wobei dieser Schenkel konisch ausgebildet ist. Dementsprechend konisch ausgebildet ist auch die umlaufende Ringnut im Spannring, so daß der Spannring beim Verschließen, das heißt beim Verengen des Durchmessers auf den konischen Gegenflächen entlanggleitet. Dabei wird zunehmender Druck auf die Ringdichtung ausgeübt, wobei der umlaufende Druckansatz am Spannring schließlich pressend auf den ersten Schenkel der Ringdichtung einwirkt. Weiterhin sind Führungselemente in Form einer Fixiernut im Spannring und eines Fixieransatzes im Dichtungskörper zur gegenseitigen Positionierung angeordnet. Der Spannring gemäß der Erfindung besteht aus mehreren Spannringteilen, vorzugsweise aus zwei gleichen Spannringteilen, die mittels Verschlußelementen auf dem Dichtbereich verspannt werden. Diese Verschlußelemente sind vorzugsweise als Schraubbolzen unverlierbar in Drehlagern angeordnet und können nach der Positionierung der Spannringteile in Gegenlagern des korrespondierenden Spannringteiles eingehängt werden. Durch Eindrehen der Spannschrauben werden die Spannringteile gegeneinander gezogen und verpressen das Dichtungssystem in der oben bereits beschriebenen Art.

Die Erfindung wird anhand von acht Figuren näher erläutert.
- Figur 1: zeigt eine fertigmontierte Kabelmuffe gemäß der Erfindung.
- Figur 2: zeigt einen Dichtungskörper.
- Figur 3 3: zeigt eine Ringdichtung gemäß der Erfindung.
- Figur 4: zeigt einen Spannring gemäß der Erfindung.
- Figur 5: zeigt einen Querschnitt der Kabelmuffe im Dichtungsbereich vor der Spannringmontage.
- Figur 6: zeigt einen Querschnitt im Dichtungsbereich mit aufgesetztem Spannring vor dem Verpressen.
- Figur 7: zeigt einen Querschnitt durch den Dichtungsbereich im Endzustand.
- Figur 8: zeigt eine Ansicht der Kabelmuffe gemäß der Erfindung von oben.

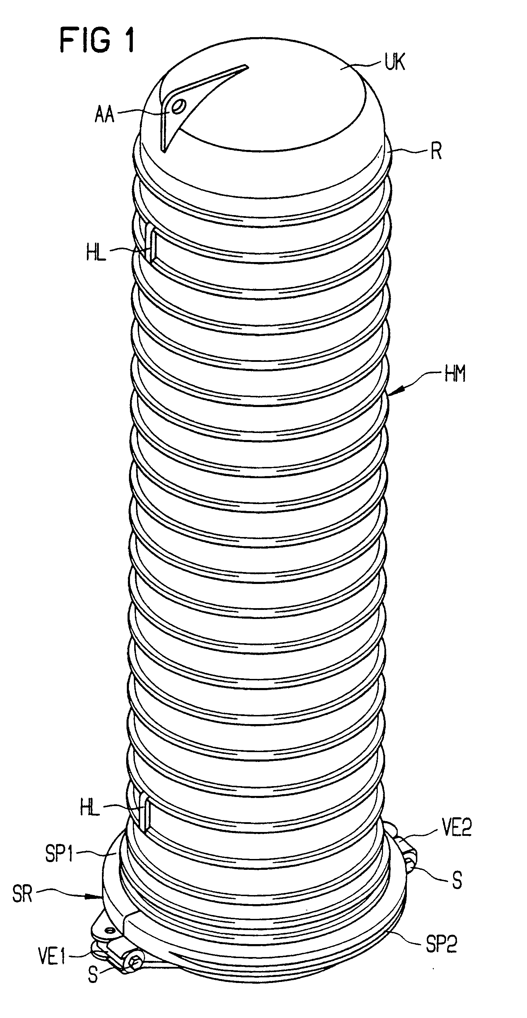

In Figur 1 ist eine Haubenmuffe HM im fertigmontierten Zustand gezeigt. Daraus ist ersichtlich, daß diese Haubenmuffe aus einem Umhüllungskörper UK besteht, der an einer Stirnseite haubenförmig abgeschlossen ist. Auf der gegenüberliegenden Stirnseite erfolgt der Verschluß mit Hilfe eines Dichtungskörpers, der gegenüber dem Umhüllungskörper UK mit Hilfe eines Dichtungssystems gemäß der Erfindung dicht eingesetzt wird. Hierzu dient neben dem hier nicht sichtbaren Dichtungsring ein Spannring SR, der aus zwei Spannringteilen SP1 und SP2 besteht. Mit Hilfe von Verschlußelementen VE1 und VE2, die korrespondierend an den Enden der Spannringteile SP1 und SP2 angeordnet sind, erfolgt das Aufziehen des Spannrings SR. Durch die Durchmesserverringerung wird der erforderliche Schließdruck auf die Ringdichtung erzeugt. Die Haubenmuffe HM ist außerdem mit Haltelaschen HL versehen, mit deren Hilfe eine Mastbefestigung ermöglicht wird. Außerdem ist eine Aufhängevorrichtung AA vorgesehen, an der zum Beispiel eine Aufhängung an einem Tragseil erfolgen kann. Zur Versteifung des Umhüllungskörpers UK sind Rippen R vorgesehen, durch die die mechanische Festigkeit erhöht wird.

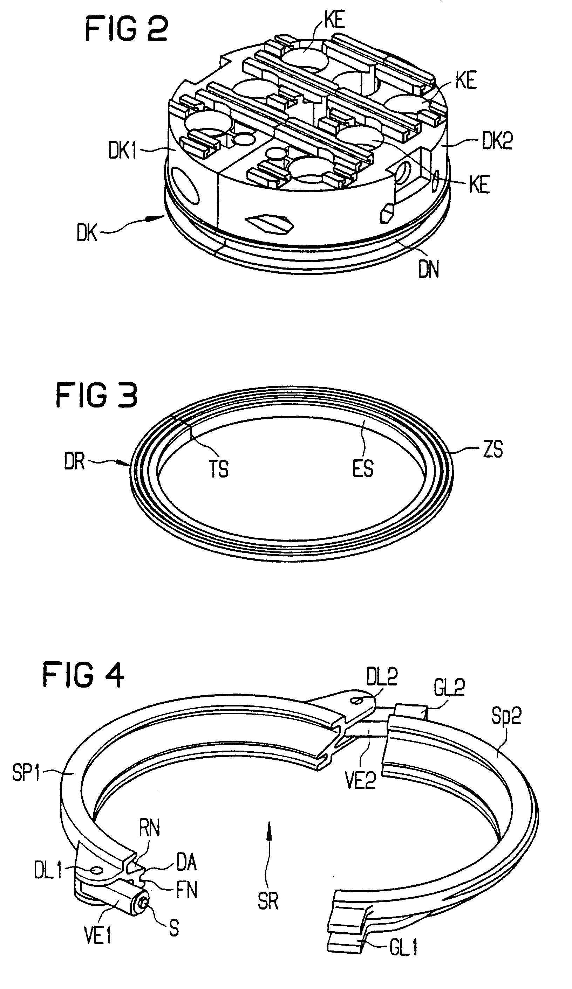

In Figur 2 ist ein Dichtungskörper DK dargestellt, der aus zwei Dichtungskörperteilen DK1 und DK2 besteht. In der Teilungsebene wie auch im übrigen Teil des Dichtungskörpers sind Kabeleinführungen KE zur Einführung von Kabeln vorgesehen. Durch die Kabeleinführungen in der Teilungsebene können auch ungeschnittene Kabel eingeführt werden. Der Dichtungskörper ist mit einer umlaufenden, U-förmigen Dichtungsnut DN versehen, in die eine entsprechende Ringdichtung zur Abdichtung gegenüber dem Umhüllungskörper eingelegt wird. Ein derartiger Dichtungskörper DK ist im Prinzip bekannt und wird bereits auch für längsgeteilte Kabelgarnituren verwendet, bei denen ein längsgeteiltes Muffenrohr auf den Dichtungskörper bzw. auf die umlaufende Ringdichtung dicht aufgezogen wird. Aufgabe der Erfindung ist nun u.a. auch, daß ein derartiger Dichtungskörper auch für haubenförmige Umhüllungskörper verwendet werden kann. Da jedoch bei Haubenmuffen ein Aufziehen infolge des starren Durchmessers nicht wie bei längsgeteilten Kabelgarnituren erfolgen kann, ist das erfindungsgemäße Dichtungssystem, das nachstehend erläutert wird, entwickelt worden.

Die Figur 3 zeigt die für das neue Dichtungssystem entwikkelte Ringdichtung DR, die im Querschnitt eine L-Form aufweist. Diese Querschnittsform ist in dieser Darstellung nicht klar erkennbar, doch sind der erste Schenkel ES und der zweite Schenkel ZS der L-Form erkennbar. Der erste Schenkel ES taucht bei der Montage in die Dichtungsnut des Dichtungskörpers ein, während der zweite Schenkel ZS zur Abdichtung gegen den Umhüllungskörper dient. Weiterhin ist erkennbar, daß unter Umständen auch eine geteilte Ringdichtung DR eingesetzt werden kann, wobei dann in der Trennstelle TS entsprechende, an sich bekannte Verbindungsmaßnahmen getroffen werden.

In Figur 4 ist der Spannring SR dargestellt, der im Zusammenhang mit der vorher beschriebenen Ringdichtung DR das erfindungsgemäße Dichtungssystem bildet. Dieser Spannring SR besteht in diesem Fall aus zwei gleichen Spannringteilen SP1 und SP2, die über Verschlußelemente VE1 und VE2 miteinander verbunden werden können. Diese Verschlußelemente VE1 bzw. VE2 werden an den einen Enden des Spannringteiles SP1 in Drehlagern DL1 bzw. DL2 drehbar gelagert. Nach dem Zusammensetzen der Spannringteile SP1 und SP2 auf dem bereits vormontierten Dichtungssystem werden dann die Verschlußelemente VE1 und VE2 mit ihren Verschlußschrauben oder Muttern in Gegenlagern GL1 bzw. GL2 des korrespondierenden Spannringteiles SP2 eingehängt. Durch Anziehen der Spannschrauben S oder Muttern erfolgt schließlich das Zusammenziehen der beiden Spannringteile SP1 und SP2 bis der erforderliche Dichtungsdruck eingestellt ist. Das Aufnahmeprofil der Ringdichtung SR bzw. der Spannringteile SP1 und SP2 setzt sich aus der Ringnut RN, einem umlaufenden Druckansatz DA und einer darunter liegenden Fixiernut FN zusammen. Beim Aufsetzen des Spannringes SR bzw. der Spannringteile SP1 und SP2 wird der umlaufende Flansch des Umhüllungskörpers und der zweite Schenkel der bereits vormontierten Ringdichtung in die Ringnut eingeführt. Dabei ergibt sich automatisch die Position des Druckansatzes DA für das Einwirken auf den ersten Schenkel der Ringdichtung, die bereits in der umlaufenden Dichtungsnut DN des Dichtungskörpers eingesetzt ist. Automatisch erfolgt bei diesem Montagevorgang auch die Einführung des umlaufenden Fixieransatzes des Dichtungskörpers in der Fixiernut FN, falls ein solcher Fixieransatz am Dichtungskörper vorhanden ist.

Bei dieser Ausführungsform sind die beiden Verschlußelemente VE1 und VE2 an einer Spannringhälfte SP1 drehbar gelagert. Die zweite Spannringhälfte SP2 kann somit relativ zu diesen Verschlußelementen in Richtung des Verschlußelementdrehpunktes bewegt werden, je nachdem wie weit die beiden entsprechenden Verschlußschrauben S bzw. Muttern in bzw. auf ein Gewinde der Verschlußelemente VE1, VE2 geschraubt werden. Somit sind die beiden Spannringe SP1 und SP2 auf einer Seite nicht nur zueinander drehbar gelagert, sondern können auch in Richtung des Drehpunktes zueinander bewegt werden. Durch wechselseitiges Anziehen der beiden Verschlußschrauben S wird die Ringdichtung zwischen dem Spannring SR und der Haube sowie zwischen dem Spannring und dem Dichtungskörper verspannt. Das Verspannen des Spannringes SR auf zwei Seiten hat den Vorteil, daß die Schließkräfte gleichmäßig über den Umfang verteilt auf die Dichtung wirken. Wären die Spannringhälften zueinander nur drehbar angeordnet, so würden im Bereich des Drehpunktes keine hohen Vorspannkräfte auf die Dichtung wirken. Die Muffe würde in diesem Bereich zuerst undicht werden.

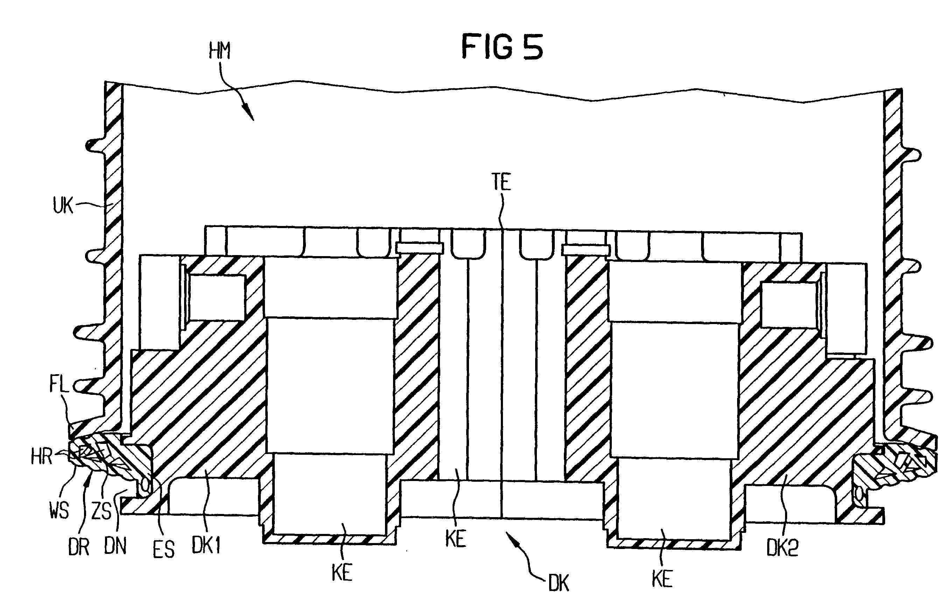

Die Figur 5 zeigt den Beginn der Montage zur Abdichtung der Haubenmuffe HM. In diesem Zustand ist bereits die Ringdichtung DR in der U-förmigen Dichtungsnut DN des aus zwei Dichtungskörperteilen DK1 und DK2 bestehenden Dichtungskörpers DK eingesetzt. In dieser Querschnittsdarstellung ist zu erkennen, daß die Ringdichtung DR mit seinem ersten Schenkel ES in die Dichtungsnut DN des Dichtungskörpers DK eingesenkt ist, während der zweite Schenkel ZS, in diesem Fall der längere Schenkel, an dem Dichtungsflansch FL des Umhüllungskörpers UK anliegt. Aus der Querschnittsdarstellung der Ringdichtung DR ist zu erkennen, daß beide Dichtungsflächen des zweiten Schenkels ZS konisch erweiternd dem ersten Schenkel ES entgegenlaufen. Außerdem ist zu erkennen, daß die Ringdichtung DR mit mehreren ringförmig verlaufenden Hohlräumen HR versehen ist, um die erforderliche Flexibilität gewährleisten zu können. Außerdem ist aufgezeigt, daß die konisch verlaufenden Flächen des zweiten Schenkels ZS mit einer Wellenstruktur WS versehen sind, die zur Verbesserung der Dichtungsverhältnisse beiträgt. In dem Schnittbild sind weiterhin die Kabeleinlässe KE erkennbar, wobei der mittlere Kabeleinlaß in der Trennebene TE des Dichtungskörpers DK liegt.

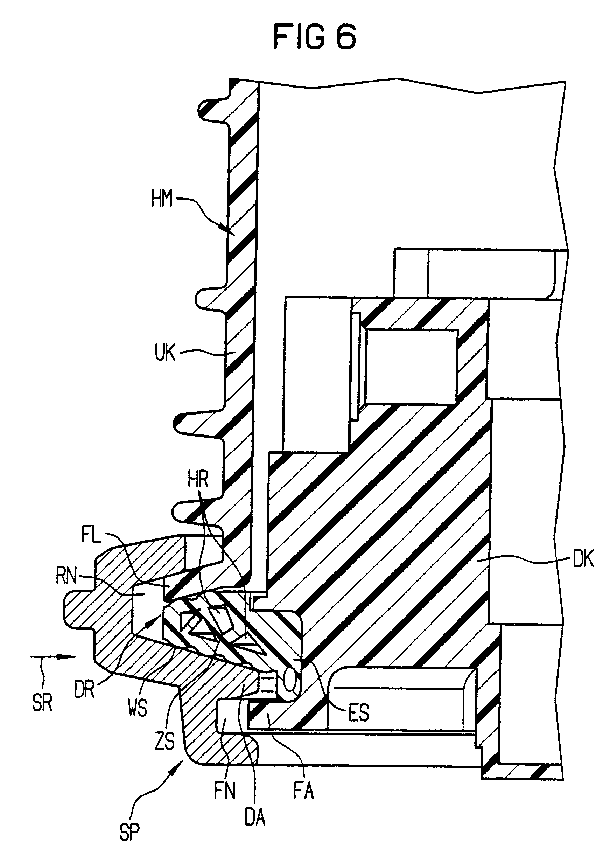

Die Figur 6 zeigt den nächsten Abschnitt des Schließvorganges. Es wird hier bereits der Spannring SP so in Position gesetzt, daß er einerseits mit einer Flanke seiner umlaufenden Ringnut den Flansch FL des Umhüllungskörpers UK der Haubenmuffe HM und mit seiner zweiten Flanke die konisch verlaufende Dichtfläche des zweiten Schenkels ZS der Ringdichtung DR umfaßt. Der Querschnitt der Ringdichtung DR und der Querschnitt der Ringnut RN des Spannringes SP sind so gestaltet, daß der umlaufende Druckansatz DA an der unteren Seite des Spannringes SP auf den in der Dichtungsnut DN des Dichtungskörpers DK eingesetzten ersten Schenkel ES der Ringdichtung radial einwirken kann. Dadurch wird der erste Schenkel ES der Ringdichtung DR zwischen dem Dichtungskörper DK und dem Spannring SP vorgespannt. In dieser Figur 6 ist zusätzlich die Spannrichtung SR mit einem Pfeil angegeben, in der sich der Spannring SP beim anschließenden Spannvorgang radial bewegt.

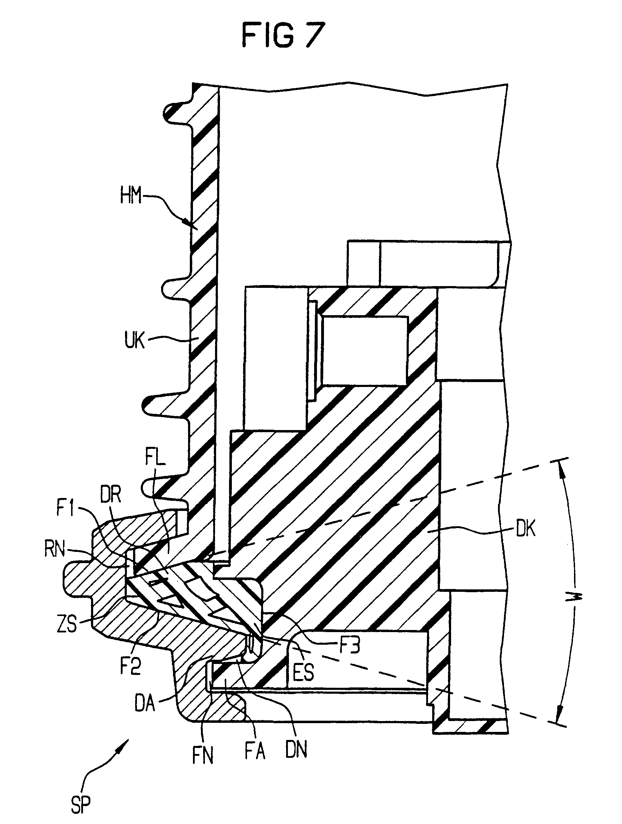

In Figur 7. wird nun der Endzustand des geschlossenen Dichtungssystems dargestellt. Daraus ist ersichtlich, daß die Abdichtung zwischen dem Umhüllungskörper UK und dem Dichtungskörper DK an den Dichtungsflächen F1 zwischen dem Flansch FL und der Ringdichtung und der Dichtungsfläche F2 zwischen der Ringdichtung und der zweiten Flanke des Spannringes SP erfolgt, wobei zusätzlich durch den Druckansatz DA des Spannringes SP der erste Schenkel ES der Ringdichtung DR gegen die Dichtungsfläche F3 innerhalb der Dichtungsnut DN des Dichtungskörpers DK gepreßt wird. In der Figur ist der Winkel W angegeben, unter dem die Dichtungsflächen F1 und F2 geneigt sind. Dieser Winkel entspricht auch der Winkelöffnung der Ringnut im Spannring SP, wenn die Außenwandung des Flansches FL parallel zur Innenwandung des Flansches FL verläuft. Selbstverständlich ist die Ringdichtung DR im Dichtungsbereich so ausgelegt, daß sich der erforderliche Schließdruck im Endzustand einstellt. Das Material der Ringdichtung ist ein Elastomer, vorzugsweise Silikon. Um die Fertigungstoleranzen ausgleichen zu können, wurden möglichst große Vorspannwege der Ringdichtung angestrebt. Dies wird in erster Linie durch Hohlräume innerhalb des Dichtungsprofils ermöglicht. Dabei können Vorspannwege realisiert werden, die bei massiven Dichtungen nicht möglich wären, da Silikonwerkstoffe inkompressibel sind. Die Hohlräume in der Dichtung sind so gewählt, daß die verbleibenden Stege nicht senkrecht zur Vorspannrichtung stehen, um definierte Verformungen beim Schließvorgang zu erhalten. Die auf den Dichtungsflächen F1, F2, F3 angebrachten Wellentrukturen WS erzeugen einen zusätzlichen Anpreßdruck. Die Ringdichtung DR hat neben seiner Dichtfunktion auch die Aufgabe, einen Bund zu bilden, auf dem der Umhüllungskörper UK bei der Vormontage aufgesetzt werden kann, so daß durch die Geometrie der Ringdichtung zusätzlich eine Montageerleichterung gegeben ist. Aus dieser Figur ist auch noch zu erkennen, daß die äußere Nutflanke der Dichtungsnut DN des Dichtungskörpers DK einen Fixieransatz bildet, der in eine korrespondierende Fixiernut FN des Spannringes SP eingreift. Auf diese Weise ist zusätzlich eine Positionssicherung garantiert, so daß der Dichtungskörper DK nicht abwandern kann.

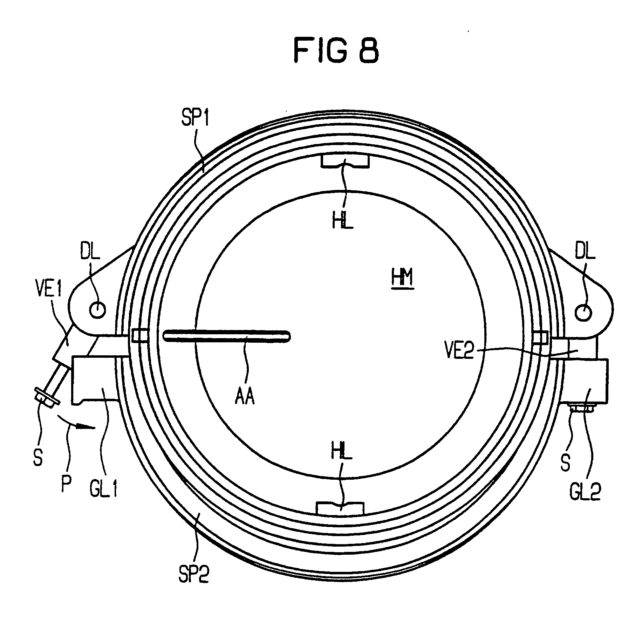

In Figur 8 ist in einer Draufsicht die Anordnung der Haubenmuffe HM erläutert, wobei der Verschluß auf der rechten Seite mit dem Verschlußelement VE2 bereits vormontiert ist. Auf der linken Seite wird gerade das im Drehlager DL drehbar gelagerte Verschlußelement VE1 in das Gegenlager GL1 des Spannringteiles SP2 in Pfeilrichtung P eingeschwenkt. Anschließend werden die beiden Spannringteile SP1 und SP2 durch wechselseitiges Anziehen der beiden Schrauben S gegeneinander gezogen bis der erforderliche Schließdruck eingestellt ist. Weiterhin sind Haltelaschen HL und der Aufhängeansatz AA erkennbar.

Zusammenfassend ist festzustellen, daß die an sich bekannten Dichtungskörper für längsgeteilte Kabelgarnituren nun auch bei Haubenmuffen verwendet werden können, wenn eine entsprechende Ringdichtung gemäß der Erfindung eingesetzt wird. Diese Ringdichtung erfüllt dann neben der Dichtungsfunktion auch die Aufgabe einer Montagehilfe, da die als Umhüllungskörper verwendete Haube auf der im Dichtungskörper bereits positionierten Ringdichtung aufgesetzt werden kann. Außerdem ist die Ringnut des Spannringes jeweils dem Querschnitt der Ringdichtung angepaßt, so daß eine optimale Dichtwirkung bei den vorgegebenen Verhältnissen erreicht werden kann, zumal zusätzlich durch die radiale Anpressung des ersten Schenkels der Ringdichtung in der Dichtungsnut auch ein radial wirkender Dichtungsdruck wirksam wird. Durch die ringförmigen Hohlräume in der Ringdichtung sind auch große Vorspannwege möglich. Durch die mechanische Fixierung des Dichtungskörpers im Spannring mit Hilfe der Fixiereinrichtungen ist der Dichtungskörper so fixiert, daß die Vorspannung der Ringdichtung auch bei äußeren mechanischen Belastungen nicht reduziert wird. Bei der Ausführungsform gemäß der Erfindung sind die Spannringteile nicht nur durch ein Drehgelenk miteinander verbunden. Durch die tangentiale Verbindung mit den Verschlußelementen können die Spannringteile gleichmäßig in Dichtposition gebracht werden, so daß eine einseitige Belastung der Ringdichtung ausgeschlossen ist, wie es der Fall wäre, wenn nur ein Drehgelenk eingesetzt wird. Dadurch ist also eine gleichmäßige Druckverteilung beim Schließvorgang ermöglicht.

## Patentansprüche

1. Kabelmuffe aus einem Umhüllungskörper und mindestens einem stirnseitigen Dichtungskörper (DK) mit umlaufender, U-förmiger Dichtungsnut (DN) und einer Ringdichtung (DR), wobei der Umhüllungskörper (UK) am stirnseitigen Ende einen umlaufenden, konisch abgeschrägten Flansch (FL) aufweist, der zusammen mit der in der Dichtungsnut (DN) eingesetzten Ringdichtung (DR) von einem Spannring (SP) in dessen Ringnut (RN) umfaßt ist,
**dadurch gekennzeichnet,**
**daß** die Ringdichtung (DR) als Grundquerschnitt eine L-Form aufweist, daß der erste Schenkel (ES) der L-Form im Querschnitt der Dichtungsnut (DN) des Dichtungskörpers (DK) angepaßt ist, ist, daß der zweite Schenkel (ZS) der L-Form zum ersten Schenkel (ES) hin im Querschnitt beidseitig konisch zulaufend verbreitert ist, wobei der konische Verlauf dieses zweiten Schenkels (ZS) auf der einen Seite dem Verlauf des abgeschrägten Flansches (FL) und auf der anderen Seite dem Verlauf einer konischen Nutwandung der Ringnut (RN) im Spannring (SP, SP1, SP2) entspricht und daß der Spannring (SP, SP1, SP2) einen auf den in der Dichtungsnut (DN) des Dichtungskörpers (DK) positionierten ersten Schenkel (ES) der Ringdichtung (DR) wirkenden umlaufenden Druckansatz (DA) aufweist.

2. Kabelmuffe nach Anspruch 1,
**dadurch gekennzeichnet,**
**daß** die Ringdichtung (DR) ringförmig verlaufende, innere Hohlräume (HR) aufweist.

3. Kabelmuffe nach einem der vorhergehenden Ansprüche,
**dadurch gekennzeichnet,**
**daß** die Dichtflächen (F1, F2, F3) der Ringdichtung (DR) umlaufende Wellenstruktur (WS) aufweisen.

4. Kabelmuffe nach einem der vorhergehenden Ansprüche,
**dadurch gekennzeichnet,**
**daß** der Winkel (W) zwischen den beiden Dichtungsflächen (F1, F2) der Ringdichtung (DR) gleich ist dem Öffnungswinkel zwischen der Innenfläche des umlaufenden Flansches (FL) und der Innenfläche der Nutwandung des Spannringes (SR), die der Ringdichtung (DR) gegenüberliegt.

5. Kabelmuffe nach einem der vorhergehenden Ansprüche,
**dadurch gekennzeichnet,**
**daß** der Spannring (SP) aus mehreren Spannringteilen, vorzugsweise aus zwei gleichen Spannringteilen (SP1, SP2) gebildet ist und mittels Verschlußelementen (FE1, FE2) auf dem Dichtbereich verspannbar ist.

6. Kabelmuffe nach Anspruch 5,
**dadurch gekennzeichnet,**
**daß** die Verschlußelemente (VE1, VE2) einseitig in Drehlagern (DL) der Spannringteile (SP1, SP2) drehbar gelagert sind, an ihren freien Enden Gewinde aufweisen, in bzw. auf die Schließschrauben (S) oder Muttern ein- bzw. aufdrehbar sind, wobei diese Verschlußelemente (VE1, VE2) in Gegenlagern (GL) des korespondierenden Endes eines Spannringteiles (SP2, SP2) vor dem Verspannen einschwenkbar sind.

7. Kabelmuffe nach einem der vorhergehenden Ansprüche,
**dadurch gekennzeichnet,**
**daß** eine umlaufende Fixiernut (FN) im Spannring (SP) oder den Spannringteilen (SP1, SP2) angeordnet ist, in die ein umlaufender Fixieransatz (FA) des Dichtungskörpers (DK) eingreift.

8. Kabelmuffe nach einem der vorhergehenden Ansprüche,
**dadurch gekennzeichnet,**
**daß** der Umhüllungskörper ein Rohr ist.

9. Kabelmuffe nach Anspruch 8,
**dadurch gekennzeichnet,**
**daß** das Rohr einfach längsgeteilt ist.

10. Kabelmuffe nach einem der Ansprüche 1 bis 7,
**dadurch gekennzeichnet,**
**daß** der Umhüllungskörper (UK) eine Muffenhaube (HM) ist.

11. Kabelmuffe nach einem der vorhergehenden Ansprüche,
**dadurch gekennzeichnet,**
**daß** ein Aufhängeansatz (AA) am Umhüllungskörper angeordnet ist.

12. Kabelmuffe nach einem der vorhergehenden Ansprüche,
**dadurch gekennzeichnet,**
**daß** mindestens eine Haltelasche (HL) am Umhüllungskörper angeordnet ist.

13. Kabelmuffe nach einem der vorhergehenden Ansprüche,
**dadurch gekennzeichnet,**
**daß** der Umhüllungskörper (UK) zur Verstärkung Rippen (R) aufweist.

14. Kabelmuffe nach einem der vorhergehenden Ansprüche,
**dadurch gekennzeichnet,**
**daß** die Ringdichtung aus einem Elastomer, vorzugsweise aus Silikon besteht.

## Claims

1. Cable sleeve comprising a covering body and at least one end-face sealing body (DK) having a circumferential, U-shaped sealing groove (DN) and a ring seal (DR), the covering body (UK) having, on the end-face end, a circumferential, conically bevelled flange (FL) which, together with the ring seal (DR) inserted in the sealing groove (DN), is held by a clamping ring (SP) in its ring groove (RN), **characterized in that** the ring seal (DR) has an L shape as the basic cross section, **in that** the first limb (ES) of the L shape is matched in cross section to the sealing groove (DN) of the sealing body (DK), **in that** the second limb (ZS) of the L shape is widened towards the first limb (ES) tapering conically on both sides in cross section, the conical profile of this second limb (ZS) corresponding on the one side to the profile of the bevelled flange (FL) and on the other side to the profile of a conical groove wall of the ring groove (RN) in the clamping ring (SP, SP1, SP2), and **in that** the clamping ring (SP, SP1, SP2) has a circumferential pressure projection (DA) which acts on the first limb (ES) of the ring seal (DR), which limb is positioned in the sealing groove (DN) of the sealing body (DK).

2. Cable sleeve according to Claim 1, **characterized in that** the ring seal (DR) has annularly extending, inner cavities (HR).

3. Cable sleeve according to one of the preceding claims, **characterized in that** the sealing surfaces (F1, F2, F3) of the ring seal (DR) have a circumferential wavy structure (WS).

4. Cable sleeve according to one of the preceding claims, **characterized in that** the angle (W) between the two sealing surfaces (F1, F2) of the ring seal (DR) is equal to the opening angle between the inner surface of the circumferential flange (FL) and the inner surface of the groove wall of the clamping ring (SR), which inner surface lies opposite the ring seal (DR).

5. Cable sleeve according to one of the preceding claims, **characterized in that** the clamping ring (SP) is formed from a plurality of clamping ring parts, preferably from two identical clamping ring parts (SP1, SP2), and can be clamped on the sealing region by means of fastening elements (FE1, FE2).

6. Cable sleeve according to Claim 5, **characterized in that** the fastening elements (VE1, VE2) are mounted rotatably on one side in rotational bearings (DL) of the clamping ring parts (SP1, SP2) and have threads at their free ends into or onto which the closing screws (S) or nuts can be screwed, it being possible for these fastening elements (VE1, VE2), before the clamping takes place, to be pivoted into counterbearings (GL) of the corresponding end of a clamping ring part (SP1, SP2).

7. Cable sleeve according to one of the preceding claims, **characterized in that** a circumferential fixing groove (FN) is arranged in the clamping ring (SP) or the clamping ring parts (SP1, SP2) and a circumferential fixing projection (FA) of the sealing body (DK) engages in said fixing groove.

8. Cable sleeve according to one of the preceding claims, **characterized in that** the covering body is a tube.

9. Cable sleeve according to Claim 8, **characterized in that** the tube has a single longitudinal division.

10. Cable sleeve according to one of Claims 1 to 7, **characterized in that** the covering body (UK) is a sleeve hood (HM).

11. Cable sleeve according to one of the preceding claims, **characterized in that** an attachment projection (AA) is arranged on the covering body.

12. Cable sleeve according to one of the preceding claims, **characterized in that** at least one supporting bracket (HL) is arranged on the covering body.

13. Cable sleeve according to one of the preceding claims, **characterized in that** the covering body (UK) has ribs (R) for reinforcement purposes.

14. Cable sleeve according to one of the preceding claims, **characterized in that** the ring seal consists of an elastomer, preferably of silicone.

## Revendications

1. Manchon de câble constitué d'un corps enveloppant et d'au moins un corps d'étanchéité facial (DK) comportant une gorge d'étanchéité circulaire en forme de U (DN) et un joint annulaire (DR), le corps enveloppant (UK) présentant du côté facial une collerette circulaire inclinée de manière conique (FL), laquelle est entourée, conjointement avec le joint annulaire (DR) logé dans la gorge d'étanchéité (DN), d'un collier de serrage (SP) dans la gorge annulaire (RN) de celui-ci, **caractérisé en ce que** le joint annulaire (DR) présente comme section transversale de base une forme en L, la première aile (ES) de la forme en L est adaptée en section transversale à la gorge d'étanchéité (DN) du corps d'étanchéité (DK), la seconde aile (ZS) de la forme en L s'élargit en section transversale de manière conique de chaque côté vers la première aile (ES), l'allure conique de ladite seconde aile (ZS) correspondant d'un côté à l'allure de la collerette inclinée (FL) et de l'autre côté à l'allure d'une paroi conique de la gorge annulaire (RN) dans le collier de serrage (SP, SP1, SP2), et **en ce que** le collier de serrage (SP, SP1, SP2) présente un épaulement de pression circulaire (DA) agissant sur la première aile (ES) du joint annulaire (DR), positionnée dans la gorge d'étanchéité (DN) du corps d'étanchéité (DK).

2. Manchon de câble selon la revendication 1, **caractérisé en ce que** le joint annulaire (DR) présente des cavités internes (HR) s'étendant de façon annulaire.

3. Manchon de câble selon l'une quelconque des revendications précèdentes, **caractérisé en ce que** les surfaces d'étanchéité (F1, F2, F3) du joint annulaire (DR) présentent une structure ondulée circulaire (WS).

4. Manchon de câble selon l'une quelconque des revendications précèdentes, **caractérisé en ce que** l'angle (W) entre les deux surfaces d'étanchéité (F1, F2) du joint annulaire (DR) est égal à l'angle d'ouverture entre la surface intérieure de la collerette circulaire (FL) et la surface intérieure de la paroi de gorge du collier de serrage (SR), située du côté opposé du joint annulaire (DR).

5. Manchon de câble selon l'une quelconque des revendications précédentes, **caractérisé en ce que** le collier de serrage (SP) est constitué de plusieurs segments, de préférence de deux segments identiques (SP1 et SP2), et peut être serré contre la zone d'étanchéité au moyen d'éléments de fermeture (VE1, VE2).

6. Manchon de câble selon la revendication 5, **caractérisé en ce que** les éléments de fermeture (VE1, VE2) sont logés d'un côté de manière à pouvoir pivoter dans des coussinets de pivotement (DL) des segments de collier de serrage (SP1, SP2) et présentent un filet à leurs extrémités libres, dans ou sur lequel des vis de fermeture (S) ou des écrous de serrage peuvent être vissés, lesdits éléments de fermeture (VE1, VE2) pouvant être introduits par pivotement dans des contre-appuis (GL) prévus aux extrémités correspondantes d'un segment de collier de serrage (SP1, SP2), avant le serrage.

7. Manchon de câble selon l'une quelconque des revendications précédentes, **caractérisé en ce qu'**une gorge de fixation circulaire (FN), dans laquelle vient se loger un épaulement de fixation circulaire (FA) du corps d'étanchéité (DK), est prévue dans le collier de serrage (SP) ou dans les segments de collier de serrage (SP1, SP2).

8. Manchon de câble selon l'une quelconque des revendications précèdentes, **caractérisé en ce que** le corps enveloppant est un tube.

9. Manchon de câble selon la revendication 8, **caractérisé en ce que** le tube est simplement fendu longitudinalement.

10. Manchon de câble selon l'une quelconque des revendications 1 à 7, **caractérisé en ce que** le corps enveloppant (UK) est un manchon à coiffe (HM).

11. Manchon de câble selon l'une quelconque des revendications précèdentes, **caractérisé en ce qu'**un appendice de suspension (AA) est disposé sur le corps enveloppant.

12. Manchon de câble selon l'une quelconque des revendications précèdentes, **caractérisé en ce qu'**au moins une patte de retenue (HL) est disposée sur le corps enveloppant.

13. Manchon de câble selon l'une quelconque des revendications précédentes, **caractérisé en ce que** le corps enveloppant (UK) présente des nervures (R) de renforcement.

14. Manchon de câble selon l'une quelconque des revendications précèdentes, **caractérisé en ce que** le joint annulaire est constitué d'un élastomère, de préférence de silicone.
